# FASCICULE DE BREVET EUROPEEN

(11) **EP 0 425 357 B1**
(45) Date de publication et mention de la délivrance du brevet: **05.01.1994**
(21) Numéro de dépôt: 90402964.2
(22) Date de dépôt: 22.10.1990
(51) Int. Cl.: A61C 17/00

(54) **Instrument permettant l'élimination des dépôts et taches sur les dents**
Zahnreinigungsgerät
Apparatus for cleaning or polishing teeth

(30) Priorité: 23.10.1989 FR 8913813
(43) Date de publication de la demande: 02.05.1991
(73) Titulaire: Varaine, Jean-Pierre, F-60200 Compiegne (FR); Triolet, Alain, F-02790 Seraucourt Le Grand (FR)
(72) Inventeur: Varaine, Jean-Pierre, F-60200 Compiegne (FR)
(74) Mandataire: Boutin, Antoine

(56) Documents cités:
- EP-A- 0 001 013
- EP-A- 0 168 059
- EP-A- 0 337 443
- US-A- 3 660 902
- US-A- 3 862 065

## Description

La présente invention concerne les instruments qui sont conçus pour le nettoyage des dents.

En dehors des instruments à usage professionnel, qui sont destinés aux dentistes et dont l'emploi requiert une grande dextérité et des précautions particulières, il existe déjà des instruments destinés à être utilisés par des particuliers pour le nettoyage de certaines parties des dents. Cependant il s'agit d'instruments conçus pour des interventions très spécifiques de grattage ou similaire. Ainsi, le brevet US 3.660.902 décrit un instrument destiné à une telle opération et qui est constitué par un manche de manoeuvre dont une extrémité est coudée et porte un outil de travail apte à être engagé à l'intérieur de l'interstice entre deux dents afin de nettoyer cet espace. A cet effet, le corps de cet outil présente une forme générale triangulaire de surface décroissante, de façon à se terminer par une pointe relativement aiguë. De plus, les surfaces latérales du corps de cet outil comportent une série d'anneaux en relief entourant des dépressions susceptibles de retenir une pâte de polissage ou similaire. Du fait même de cet agencement, un tel outil ne peut être utilisé que pour le nettoyage des espaces interstitiels entre les dents.

Cependant les parties les plus apparentes des dents sont évidemment leurs faces avant. Or celles-ci portent très fréquemment des dépôts et tâches de colorants, par exemple dues à des produits tels que le tabac, le café ou le thé ou bien encore à certains médicaments. La face avant des dents est aussi très fréquemment revêtue de plaques de tartre ou d'une plaque dentaire. Pour éliminer ces dépôts et diverses tâches, il est actuellement nécessaire de recourir à l'intervention d'un dentiste pour que celui-ci procède à une opération de nettoyage au moyen d'instruments professionnels appropriés. Pour cette raison, de nombreuses personnes s'abstiennent de faire effectuer une telle opération aussi souvent que cela serait nécessaire.

C'est pourquoi la présente invention a pour but de réaliser un instrument manuel d'utilisation très simple pouvant être employé par n'importe quelle personne, sans aucune précaution particulière, pour éliminer les dépôts et les tâches existant sur ses propres dents.

A cet effet, l'invention a pour objet un instrument constitué par un manche de manoeuvre comportant un embout terminal portant un outil de travail dont l'extrêmité est destinée à être appliquée sur les dents à traiter, caractérisé en ce que cet outil consiste en une gomme constituée par un corps en résine synthétique moulée - telle que : polychlorure de vinyle, polyamide ou silicone - à l'intérieur duquel sont incorporés des éléments de polissage ou abrasifs de plus grande dureté dont le coefficient de dureté Rockwell, supérieur à 25 MPa, est toutefois inférieur à 200 MPa, ces éléments abrasifs consistant soit en des fibres de verre avec un taux de fibres de l'ordre de 20 à 30%, soit en des micrograins d'une résine synthétique de composition acceptable pour les dents, par exemple du polyméthacrylate de méthyle ou une résine polyamide, avec un taux de concentration compris entre 5 et 90% en poids, avec une préférence pour un taux de 20 à 50% et mieux encore un taux de 30 à 40%, la granulométrie de ces micro-grains étant d'environ 10 à 400 microns, de sorte que la gomme ainsi constituée permet d'effacer des dépôts et tâches sur les dents, par simple frottement de celle-ci sur la surface des dents.

Selon une autre caractéristique du présent instrument, la gomme, portée par l'embout terminal du manche de manoeuvre, est fixée de façon amovible sur cet embout en étant partiellement engagée dans un logement prévu à l'extrêmité de celui-ci, l'extrêmité opposée du manche de manoeuvre comportant un compartiment contenant au moins une seconde gomme similaire, également adaptée à être fixée de façon amovible dans le logement prévu à l'extrémité de l'embout terminal.

Dans une forme de réalisation avantageuse, il est prévu, avec un même manche de manoeuvre, plusieurs gommes de travail, toutes adaptées à être fixées de façon amovible dans le logement existant à l'extrémité de l'embout terminal, ces gommes se différenciant par le fait qu'elles comportent des surfaces de travail de formes différentes, par exemple : plate, concave, pointue, en forme de lame.

Cependant d'autres particularités et avantages de l'instrument selon l'invention apparaîtront au cours de la description suivante d'un exemple de réalisation de celui-ci. Cette description est donnée en référence au dessin annexé à simple titre indicatif, et sur lequel :

La figure 1 est une vue en élévation, avec arrachements, d'un instrument selon l'invention.

La figure 2 est une vue partielle en élévation, avec arrachement, d'un outil de travail prévu en bout du manche de manoeuvre du présent instrument.

Les figures 3 à 6 sont des vues en perspective de cinq types différents de surfaces de travail des outils pouvant être adaptés sur le manche de manoeuvre.

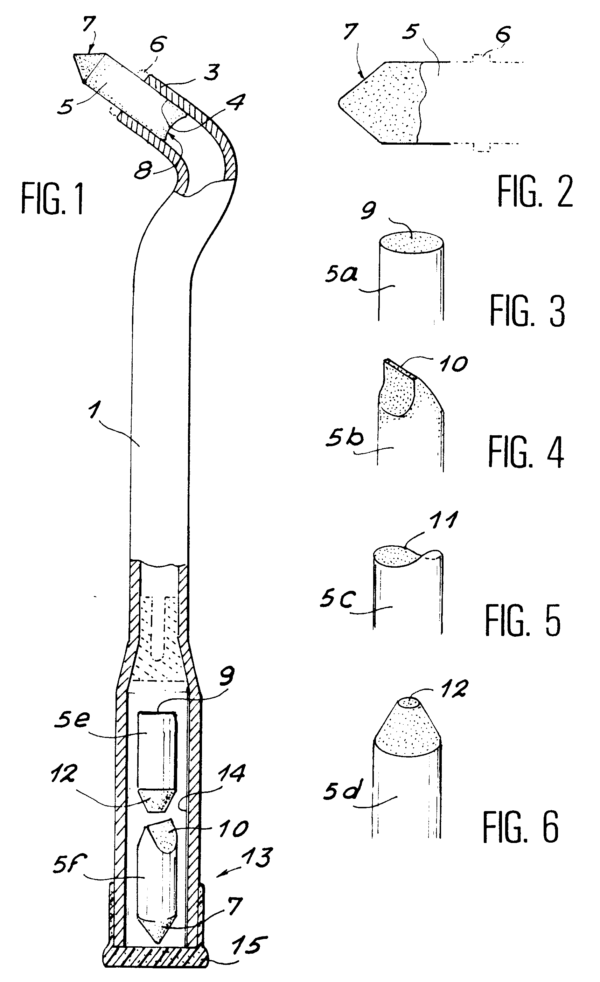

Comme représenté sur la figure 1, le présent instrument comporte un manche de manoeuvre 1 qui est destiné à être tenu dans la main. L'une des extrémités 2 de ce manche est contre-coudée pour se terminer par un embout 3 de travail. Cet embout comporte un logement 4 qui débouche à son extrémité.

Ce logement est destiné à recevoir en partie le corps 5 d'un outil de travail consistant en une sorte de gomme d'effaçage dont les caractéristiques particulières sont décrites plus loin. Dans l'exemple représenté, le logement 4 prévu dans l'embout 3 présente une section circulaire de même que le corps du manche 1. Le corps de l'outil de travail 5 présente donc lui-même une section circulaire telle que celui-ci puisse être emmanché à frottement doux à l'intérieur du logement 4. Eventuellement, le corps de cet outil peut porter une nervure externe 6 limitant son emboîtement à l'intérieur du logement 4, de façon que l'une de ses deux extrémités se trouve située en saillie à l'extérieur pour constituer l'outil de travail proprement dit, alors que son autre extrémité est placée dans le logement 4 de façon que cet outil soit parfaitement tenu par le manche 1.

Grâce à cet agencement, la gomme de travail 5 est réversible, car l'une ou l'autre de ses deux extrémités peut être placée à l'extérieur en position de travail. Or les deux extrémités de cette gomme constituent des surfaces de travail de formes différentes pouvant être utilisées pour des applications, également différentes. Ainsi, dans l'exemple représenté aux figures 1 et 2, l'une des extrémités 7 de la gomme 5 est pointue cependant que son extrémité opposée 8 présente une forme concave.

Mais il s'agit là de simples exemples. En effet, avec un même manche de manoeuvre 1, il est avantageusement prévu une série de gomme réversibles similaires à la gomme 5 et dont les extrémités ont des formes différentes pour constituer des surfaces de travail également différentes. Du reste, les figures 3 à 6 illustrent différentes formes de surfaces de travail, par exemple :
- une extrêmité plate 9 dans le cas de la gomme 5a de la figure 3
- une extrémité 10 en forme de lame dans le cas de la gomme 5b de la figure 4
- une extrémité 11 de forme concave dans le cas de la gomme 5c de la figure 5
- une extrémité 12 en forme de pointe aplatie en bout dans le cas de la gomme 5d de la figure 6.

Mais de nombreuses autres formes de surfaces de travail peuvent également être prévues.

De préférence, l'extrémité 13 du manche 1, qui est opposée à l'embout terminal 3, comporte un autre logement 14 susceptible de servir de compartiment de rangement pour deux gommes 5e et 5f ayant des surfaces de travail différentes de celle de la gomme 5 adaptée dans l'embout 3. Ainsi, cette gomme peut être remplacée par l'une ou l'autre des gommes 5e ou 5f suivant les besoins. Ce compartiment 14 est fermé par un capuchon rapporté 15 pouvant être enlevé aisément.

Le manche 1 peut être fabriqué par moulage en matière plastique injectée. De préférence, ce manche est creux sur toute sa longueur et son extrémité 13 est élargie pour que les gommes de réserve puissent être placées librement à l'intérieur du compartiment 14 correspondant. Dans l'exemple décrit, ce compartiment, de même que le logement 14, sont de section circulaire et il en est de même pour les gommes de travail. Cependant ces différentes pièces pourraient tout aussi bien avoir une section polygonale ou ovale ou toute autre section encore.

Eventuellement un capuchon peut être rapporté sur la gomme 5 placée en position de travail lorsque le présent instrument n'est pas utilisé, et ce de façon à assurer les conditions voulues d'hygiène.

Chaque gomme de travail est constituée par un corps en résine synthétique moulée à l'intérieur duquel sont incorporés des éléments de polissage et/ou des éléments abrasifs de plus grande dureté. La résine constituant le corps de la gomme peut être du polychlorure de vinyle, une résine polyamide, ou bien encore une résine silicone ou toute autre résine appropriée de qualité alimentaire et qui soit bio-compatible avec les différents agents existant dans la cavité buccale. Cette résine doit être choisie de façon que le corps ainsi constitué ait une consistance très ferme tout en étant légèrement déformable par élasticité. A cet effet, le corps moulé de cette gomme présente, abstraction faite des éléments incorporés de polissage et/ou d'abrasion, un coefficient de dureté de 50 à 120 Shöre A, de préférence entre 60 et 100, ou mieux encore entre 75 et 90.

Les éléments abrasifs incorporés dans le corps de chaque gomme doivent avoir un coefficient de dureté Rockwell supérieur à 25 MPa, mais toutefois inférieur à 200 MPa. Cette limite maximum est choisie de façon à tenir compte du fait que la dureté Rockwell de l'émail dentaire est de 300 MPa, que la résistance à la compression de cet émail est de 400 MPa et que la résistance de la compression de l'ivoire est de 300 MPa.

Dans une première forme de réalisation possible, les éléments abrasifs ainsi prévus dans le corps de chaque gomme consistent en des fibres de verre. Dans ce cas, il est prévu un taux de fibres de l'ordre de 20 à 30% à l'intérieur du corps de chaque gomme.

Dans une autre forme de réalisation possible, les éléments abrasifs consistent en des micro-grains d'une résine synthétique de composition acceptable pour les dents, par exemple du polyméthacrylate de méthyle ou d'une résine polyamide. Le taux de concentration de ces micrograins compris entre 5 et 90% en poids, avec une préférence pour un taux de 20 à 50% et mieux encore de 30 à 40%. Quant à la granulométrie de ces micro-grains,elle est d'envrion 10 à 400 microns.

Dans l'une et l'autre de ces deux formes de réalisation, les gommes ainsi réalisées sont aptes à éliminer les tâches et autres dépôts existant sur la surface des dents, et ce par gommage sous l'effet d'un simple frottement de la surface de travail d'une telle gomme contre la dent à nettoyer. En effet, les éléments abrasifs ou de polissage incorporés dans ces gommes sont en mesure d'éliminer les tâches et autres dépôts à faire disparaître et ce sans aucun risque de rayer ou d'abimer les composants naturels des dents puisque le coefficient de dureté Rockwell de ces éléments est inférieur à celui des composants naturels des dents.

Avec les micro-grains ou les fibres de verre incorporés dans le corps de la gomme, il est possible de mélanger des éléments minéraux abrasifs anti-tartre, tels que des carbonates, des silicates, de la silice, etc. Il est également possible d'incorporer, dans le corps de chaque gomme, des produits anti-tartre, et/ou des produits actifs contre la formation d'une plaque dentaire, et/ou des produits antiseptiques, des agents de confort buccal, des colorants, des parfums, des dérivés fluorés, des résines composites, etc.

Du fait que les gommes de travail soient réversibles et qu'il soit prévu plusieurs gommes ayant des surfaces de travail différentes, il est possible de choisir chaque fois l'outil de travail le plus adapté à la forme de la dent, ou de la partie de dent, à nettoyer.

Le principal avantage de l'instrument selon l'invention réside dans le fait que celui-ci peut être utilisé par n'importe quelle personne sans qu'il soit nécessaire de posséder une dextérité particulière ou de prendre des précautions spéciales, contrairement à ce qui serait le cas avec des instruments professionnels de dentiste. En conséquence, cet instrument s'adresse principalement au grand public et permet à quiconque de nettoyer aisément la surface de ses dents sans avoir recours à l'intervention d'un dentiste. Cependant il est bien évident que le présent instrument peut également être utilisé par des professionnels de l'Odonto-Stomatologie en tant qu'instrument de polissage et de détartrage.

Eventuellement cet instrument peut être utilisé en appliquant au préalable une pâte de polissage, sur la surface des dents. Dans un tel cas la forme du compartiment 14 peut être modifiée pour qu'il puisse également contenir une réserve de pâte de polissage ou similaire.

Les surfaces de travail des différentes gommes, ou de certaines d'entre elles au moins, peuvent également être rendues plus ou moins rugueuses en y prévoyant des stries ou des petites alvéoles ou bien encore des dessins en relief ou en creux.

## Revendications

1. Instrument manuel permettant l'élimination des dépots et tâches sur les dents, constitué par un manche de manoeuvre comportant un embout terminal portant un outil de travail dont l'extrêmité est destinée à être appliquée sur les dents à traiter, caractérisé en ce que cet outil consiste en une gomme (5) constituée par un corps en résine synthétique moulée - telle que : polychlorure de vinyle, polyamide ou silicone - à l'intérieur duquel sont incorporés des éléments de polissage ou abrasifs de plus grande dureté dont le coefficient de dureté Rockwell, supérieur à 25 MPa, est toutefois inférieur à 200 MPa, ces éléments abrasifs consistant soit en des fibres de verre avec un taux de fibres de l'ordre de 20 à 30 %, soit en des micro-grains d'une résine synthétique de composition acceptable pour les dents, par exemple du polyméthacrylate de méthyle ou une résine polyamide, avec un taux de concentration compris entre 5 et 90 %, en poids, avec une préférence pour un taux de 20 à 50% et mieux encore un taux de 30 à 40%, la granulométrie de ces micro-grains étant d'environ 10 à 400 microns, de sorte que la gomme (5) ainsi constituée permet d'effacer les dépôts et tâches sur les dents, par simple frottement de celle-ci sur la surface des dents.

2. Instrument selon la revendication 1, caractérisé en ce que le corps moulé de la gomme présente, abstraction faite des éléments incorporés de polissage ou d'abrasion, un coefficient de dureté de 50 à 120 Shöre A, de préférence entre 60 et 100, ou mieux encore entre 75 et 90.

3. Instrument selon l'une des revendications précédentes, caractérisé en ce que le corps moulé de la gomme contient également des éléments minéraux abrasifs anti-tartre, tels que des carbonates, des silicates, etc.

4. Instrument selon l'une des revendications précédentes, caractérisé en ce que le corps moulé de la gomme contient également des produits anti-tartre, et/ou des produits anti-plaque dentaire, et/ou des produits antiseptiques et/ou des résines composites.

5. Instrument selon l'une des revendications précédentes, caractérisé en ce que la gomme (5), portée par l'embout terminal (3) du manche de manoeuvre, est fixée de façon amovible sur cet embout en étant partiellement engagée dans un logement (4) prévu à l'extrêmité de celui-ci, l'extrêmité opposée (13) du manche de manoeuvre comportant un compartiment (14) contenant au moins une seconde gomme similaire, également adaptée à être fixée de façon amovible dans le logement (4) prévu à l'extremité de l'embout terminal (3).

6. Instrument selon la revendication 5, caractérisé en ce qu'avec un même manche de manoeuvre (1), il est prévu plusieurs gommes (5,5a,5b,5c,...) de travail, toutes adaptées à être fixées de façon amovible dans le logement (4) existant à l'extrêmité de l'embout terminal (3), ces gommes se différenciant par le fait qu'elles comportent des surfaces de travail de formes différentes, par exemple : plate (9), concave (8 ou 11), pointue (7), en forme de lame (10).

7. Instrument selon la revendication 6, caractérisé en ce que chaque gomme (5,5a,5b,5c,...) comporte deux surfaces distinctes de travail, de formes différentes, qui sont prévues à l'une et l'autre extrêmités du corps de ces gommes, chacune de celles-ci pouvant être fixée de façon amovible dans le logement (4) prévu à l'extremité de l'embout terminal (3) par engagement de l'une ou l'autre de ses extrêmités à l'intérieur dudit logement.

## Claims

1. A manual instrument for eliminating deposits and stains from teeth, constituted by a handling-shank comprising at one of its ends a terminal socket carrying a working tool, the end of which tool is intended for being applied on the teeth to be treated,
**characterized** in that this tool consists of an eraser (5) constituted by a body made of a cast synthetic resin such as polyvinyle chloride, polyamid or silicone inside which body are incorporated polishing or abrasive elements having a greater hardness than said resin, their Rockwell hardness factor being above 25 MPa, while being however less than 200 MPa, these abrasive elements consisting either of glass fibres with a fibre content in the range from 20% to 30%, or else of micro-grains of a synthetic resin having a composition acceptable for the teeth, for example polymethylméthacrylate or a polyamid resin, at a concentration comprised between 5 and 90% by weight, preferably from 20 to 50%, and still more preferably from 30 to 40%, the grain size of these micro-grains being approximately from 10 to 40 µm, so that the eraser (5) being thus constituted makes it possible to remove deposits and stains from teeth through a simple rubbing of the eraser against the tooth surface.

2. An instrument according to Claim 1, characterized in that the cast body of the eraser presents, when leaving aside the incorporated polishing or abrasive elements, a hardness factor from 50 to 120 Shore A, preferably from 60 to 100, and still more preferably from 75 to 90.

3. An instrument according to one of the preceding Claims, characterized in that the cast body of the eraser also contains anti-tartar mineral abrasive elements, such as carbonates, silicates, etc..

4. An instrument according to one of the preceding Claims, characterized in that the cast body of the eraser also contains anti-tartar agents and/or agents active against dental plaque, and/or antiseptic agents and/or composite resins.

5. An instrument according to one of the preceding Claims, characterized in that the eraser (5) carried by the terminal socket (3) of the handling shank is removably fixed to said socket by being partly engaged in a recess (4) provided at the end of said socket, the other end (13) of the handling shank comprising a compartment (14) containing at least one second similar eraser, also adapted for being removably fixed in the recess (4) provided at the end of the terminal socket (3).

6. An instrument according to Claim 5, characterized in that several working erasers (5, 5a, 5b, 5c,...) are provided with one same handling shank (1), all of them being adapted for being removably fixed in the recess (4) present at the end of the terminal socket (3), said erasers being differentiated by the fact that they comprise working surfaces having different shapes, for example : flat (9), concave (8 or 11), pointed (7), blade-shaped (10).

7. An instrument according to Claim 6, characterized in that each eraser (5, 5a, 5b, 5c,...) comprises two distinct working surfaces, having different shapes, which are provided at both ends of the eraser body, each eraser being adapted for being removably fixed in the recess (4) provided at the end of the terminal socket (3) by engaging either of its ends inside said recess.

## Patentansprüche

1. Manuelles Zahnreinigungsgerät, das einen Betätigungsgriff mit einem Kopfende aufweist, das ein Arbeitswerkzeug trägt, dessen freies Ende dazu dient, mit den zu behandelnden Zähnen in Kontakt zu kommen, dadurch gekennzeichnet, daß das Arbeitswerkzeug aus einem Gummikörper (5) besteht, der aus einem Körper aus Gießharz wie Polyvinylchlorid, Polyamid oder Silikon gebildet ist, in dessen Innern Polier- oder Schleifelemente mit größerer Härte, mit einer Rockwellhärte über 25 MPa und unterhalb 200 MPa, angeordnet sind, daß die Schleifelemente entweder aus Glasfasern mit einem Faseranteil in der Größenordnung von 20 bis 30 % oder aus Mikrokörnern aus einem Kunststoffes mit einer für die Zähne verträglichen Zusammensetzung, wie beispielsweise Polymethylmethacrylat oder ein Polyamid, mit einem Konzentrationsanteil zwischen 5 und 90 Gew.-%, vorzugsweise mit einem Verhältnis von 20 bis 50 Gew.-% und noch besser mit einem Verhältnis zwischen 30 und 40 Gew.-%, bestehen, wobei die Körnung der Mikrokörner etwa 10 bis 400 µm beträgt, so daß der so aufgebaute Gummikörper (5) das Entfernen von Ansätzen und das Arbeiten an den Zähnen durch einfaches Reiben des Geräts an der Oberfläche der Zähne ermöglicht.

2. Zahnreinigungsgerät nach Anspruch 1, dadurch gekennzeichnet, daß der gegossene Körper des Gummikörpers ohne die eingelagerten Polier- und Schleifelemente eine Shorehärte A zwischen 50 und 120, vorzugsweise zwischen 60 und 100 oder noch besser zwischen 75 und 90 aufweist.

3. Zahnreinigungsgerät nach einem der vorangehenden Ansprüche, dadurch gekennzeichnet, daß der gegossene Körper des Gummikörpers auch mineralische Schleifelemente gegen Zahnstein, wie Karbonate, Silikate usw. enthält.

4. Zahnreinigungsgerät nach einem der vorangehenden Ansprüche, dadurch gekennzeichnet, daß der gegossene Körper des Gummikörpers auch Produkte gegen Zahnstein und/oder Produkte gegen Zahnbelag und/oder antiseptische Produkte und/oder zusammengesetzte Kunstharze enthält.

5. Zahnreinigungsgerät nach einem der vorangehenden Ansprüche, dadurch gekennzeichnet, daß der Gummikörper (5), der von dem Arbeitskopf (3) des Betätigungsgriffs getragen wird, auswechselbar daran befestigt ist, indem er teilweise in eine Ausnehmung (4) am vorderen Ende eingreift, während das hintere Ende (13) des Betätigungsgriffs einen Aufnahmeraum (14) aufweist, der mindestens einen zweiten ähnlichen Gummikörper enthält, der auch auswechselbar in die Ausnehmung (4) am vorderen Ende des Arbeitskopfes (3) einsetzbar ist.

6. Zahnreinigungsgerät nach Anspruch 5, dadurch gekennzeichnet, daß zusammen mit dem gleichen Betätigungsgriff (1) mehrere Gummikörper (5, 5a, 5b, 5c, ...) vorgesehen sind, die alle auswechselbar in die Ausnehmung (4) am vorderen Ende des Arbeitskopfes (3) einsetzbar sind, wobei sich die Gummikörper dadurch unterscheiden, daß sie Arbeitsoberflächen verschiedener Form tragen, wie beispielsweise flache (9), konkave (8 oder 11), zugespitzte (7), in Klingenform (10).

7. Zahnreinigungsgerät nach Anspruch 6, dadurch gekennzeichnet, daß jeder Gummikörper (5, 5a, 5b, 5c, ...) zwei Arbeitsoberflächen verschiedener Formgebung aufweist, die am einen und am anderen Ende des Gummikörpers vorgesehen sind, wobei jeder Gummikörper auswechselbar in der Ausnehmung (4) am vorderen Ende des Arbeitskopfes (3) festsetzbar ist, indem das eine oder andere Ende des Gummikörpers in die Ausnehmung eintritt.
